# EUROPÄISCHE PATENTANMELDUNG

(11) **EP 2 166 304 A1**
(43) Veröffentlichungstag der Anmeldung: **24.03.2010**
(21) Anmeldenummer: 08105416.5
(22) Anmeldetag: 23.09.2008
(51) Int. Cl.: G01B 11/25

(54) **Beleuchtungseinheit und Verfahren zur Erzeugung eines selbstunähnlichen Musters**

(71) Anmelder: SICK AG, 79183 Waldkirch (DE)
(72) Erfinder: Hammes, Markus, 79104 Freiburg (DE); MacNamara, Shane, 79285 Ebringen (DE); Schmitz, Stephan, 79108 Freiburg (DE); Collischon, Martin, 90547 Stein (DE)
(74) Vertreter: Hehl, Ulrich

(57) **Zusammenfassung**

Es wird eine Beleuchtungseinheit (100) mit einer divergenten kohärenten Lichtquelle (104, 106) zur Erzeugung eines zumindest lokal selbstunähnlichen Musters (20) in einem Überwachungsbereich (12) angegeben. Dabei weist die Beleuchtungseinheit (100) im Strahlengang der Lichtquelle (104, 106) ein optisches Phasenelement (108, 110) auf, welches Unebenheiten aufweist, die dafür ausgebildet sind, lokale Phasendifferenzen zwischen benachbart auf das Phasenelement treffenden Lichtanteilen und somit das selbstunähnliche Muster (20) durch Interferenzen zu erzeugen.

## Beschreibung

Die Erfindung betrifft eine Beleuchtungseinheit und ein Verfahren zur Beleuchtung eines Überwachungsbereichs mit einem selbstunähnlichen Muster nach dem Oberbegriff von Anspruch 1 beziehungsweise 12.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Ist die zu überwachende Szenerie kontrastschwach oder weist Bereiche mit wenig Struktur auf, so wird dadurch die Erkennung sicherheitskritischer Ereignisse erschwert oder sogar verhindert. In ganz besonderem Maße gilt dies für dreidimensionale Überwachungsverfahren, die auf Stereoskopie beruhen. Dabei werden Bilder der Szenerie aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden, also beispielsweise Bewegungen des Roboters selbst oder Vorbeibewegungen eines Körperteils an der gefährlichen Maschine in einer unterschiedlichen Tiefenebene, die an sich völlig ungefährlich ist, aber von einer zweidimensionalen Kamera nicht differenziert werden kann. Im Rahmen der Sicherheitstechnik besteht jedoch für eine zuverlässige Sicherheitsfunktion über das sichere Erkennen eines Eingriffs in den bereitgestellten Bilddaten der zusätzliche Anspruch, diese dreidimensionalen Bilddaten in Form einer dichten Tiefenkarte zu erzeugen, also einen zuverlässigen Abstandswert für jeden Bildbereich und bevorzugt nahezu jeden Bildpunkt verfügbar zu haben.

Große strukturlose Flächen oder zueinander ähnliche Strukturmerkmale können eine eindeutige Zuordnung von Bildbereichen beim Auffinden der Korrespondenzen zwischen den Strukturelementen der Bilder verhindern. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen. Beides ist für sicherheitstechnische Anwendungen höchst gefährlich, da ein unzulässiger Eingriff unerkannt bleiben oder eine falsche Entfernung zugeordnet werden könnte. Die Abschaltung der Gefährdungsquelle unterbleibt dann möglicherweise, weil der Eingriff fehlerhaft als unkritisch eingestuft wird.

Passive Stereomesssysteme, die ihre Abstandsmessung allein aufgrund der natürlicherweise in den Bildern vorhandenen Merkmale durchführen und demnach keinen Einfluss auf die Qualität und Dichte dieser Merkmale haben, lassen daher keine zuverlässige Sicherheitsfunktion zu. Zu einer möglichen Struktur- oder Kontrastschwäche tritt hier schlicht mangelnde Helligkeit als mögliche Fehlerquelle hinzu. Selbstverständlich ist für eine vorgegebene Anwendung möglich, die Szenerie entsprechend auszuwählen oder zu präparieren, aber dies ist umständlich und schafft zusätzliche Abhängigkeiten.

Aktive Stereomesssysteme verwenden zusätzlich zu dem Empfangssystem, also im Wesentlichen zwei zueinander kalibrierten Kameras, eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und dichte Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen.

Herkömmlich werden Beleuchtungseinheiten mit Projektionstechniken ähnlich einem Diaprojektor oder auf Basis diffraktiver optischer Elemente (DOE) als Mustergeneratoren vorgeschlagen. Projektoren haben den Nachteil, dass die Mustererzeugung im Prinzip ein Selektionsprozess des ausgestrahlten Lichts ist, bei dem ein Zwischenbild in Form eines Dias über ein Objektiv in den Außen- oder Beobachtungsraum abgebildet wird. Dadurch ist die Lichtausbeute mit ca. 30% sehr schlecht. Dies ist besonders deshalb problematisch, weil die wegen ihrer Schmalbandigkeit und Langlebigkeit etwa gegenüber Halogenlampen bevorzugt eingesetzten Halbleiterlichtquellen ohnehin schon an sich kaum die erforderlichen optischen Ausgangsleistungen für mehr als kürzeste Reichweiten erreichen. Zusätzlich wird das Muster im Außenraum nur in einer Ebene scharf und verschwimmt davor abhängig von der Lichtstärke des Abbildungsobjektivs mehr oder weniger schnell. Da man die Entfernungen in dynamischen Szenerien nicht vorab kennt, ist es nicht möglich, eine einzige benötigte scharfe Abbildungsebene festzulegen. Schließlich ist auch der Aufwand im Hinblick auf die Optik, beispielsweise die Abbildungsobjektive, die Kondensorlinsen, Homogenisierungen und dergleichen sowie auch im Hinblick auf die Elektronik, beispielsweise die Ansteuerung der Lichtquelle oder die Kühlung, sehr hoch und eine Projektorlösung deshalb recht kostenintensiv.

Beleuchtungseinheiten auf Basis von DOEs haben zwar deutlich höhere Lichtausbeuten. Sie benötigen jedoch gut kollimiertes Laserlicht und transmittieren in nullter Ordnung immer einen Teil in der Größenordnung um 1% des einfallenden Lichts ungebeugt. Es verlässt also ein immer noch sehr starker gebündelter Strahl die Beleuchtungseinheit, und es sind keine Lösungen bekannt, diesen Strahl ohne Weiteres wieder aus dem Beleuchtungsfeld zu entfernen. Somit sind derartige Beleuchtungseinheiten entweder nicht in der Lage, Anforderungen an die Augensicherheit beziehungsweise die Laserschutzklasse zu erfüllen, und damit für den Betrieb unzulässig, oder man muss mit sehr wenig Nutzlicht auskommen, damit der ungebeugt transmittierte Strahl für die Augensicherheit unkritisch bleibt. Derart wenig Nutzlicht erlaubt aber keine Erzeugung dichter Tiefenkarten mit Stereoskopiealgorithmen über mehr als kürzeste Reichweiten.

Es ist aus der EP 1 543 270 B1 bekannt, sicherheitstechnische Anwendungen mit einer dreidimensionalen Stereoskopiekamera zu lösen. Dabei werden zwei verschiedene Stereoalgorithmen verwendet, nämlich eine kontur- und eine korrelationsbasierte Szenenanalyse. Das System ist passiv, arbeitet demnach allein mit dem Umgebungslicht. Diese Schwäche des Systems wirkt sich auf beide verwendeten Stereoskopieverfahren aus, welche sich daher notwendig im Hinblick auf die oben beschriebenen Nachteile passiver Systeme auch nicht kompensieren können.

In der US 2007-0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Das oben diskutierte Problem mit Augensicherheit ist hier ebenso wenig angesprochen wie sicherheitstechnische Anwendungen. Übliche Beleuchtungen dieser Art haben aber eine verhältnismäßig geringe optische Ausgangsleistung von weniger als einem Watt, und daher ist der transmittierte Strahl in der nullten Beugungsordnung weniger kritisch. Die entstehenden Helligkeiten sind in nicht sicherheitstechnischen Anwendungen auch im Allgemeinen ausreichend, weil gelegentliche Fehler in der Entfernungsberechnung oder Teilbereiche, zu denen vorübergehend keine Entfernungsdaten berechnet werden können, keine schwerwiegenden Folgen haben. Im Übrigen besteht immer die Möglichkeit, die Belichtungszeiten zu erhöhen und somit zu geringe Reichweiten der aktiven Beleuchtung auszugleichen. Das ist in der Sicherheitstechnik nicht möglich, weil in jeder sehr kurzen Ansprechperiode mehrere vollständige Tiefenkarten vorliegen müssen, um eine sichere Auswertung mit Vergleichen und Mehrfachabsicherung zu garantieren.

Es ist daher Aufgabe der Erfindung, eine Beleuchtungseinheit für die Erzeugung eines strukturierten Musters zu schaffen, die kostengünstig und zuverlässig einsetzbar ist. Dabei sollen auch hohe effektive optische Ausgangsleistungen erreichbar sein.

Diese Aufgabe wird durch eine Beleuchtungseinheit und ein Verfahren zur Beleuchtung eines Überwachungsbereichs mit einem selbstunähnlichen Muster gemäß Anspruch 1 beziehungsweise Anspruch 12 gelöst. Dieses Muster ist zumindest lokal selbstunähnlich, d.h. Musterstrukturen wiederholen sich frühestens in einem gewissen Abstand oder außerhalb einer Umgebung. Diese Umgebung ist im Falle der Verwendung der Beleuchtungseinheit mit einem stereoskopischen Sensor durch diejenige Umgebung vorgegeben, innerhalb derer der Stereoalgorithmus Korrespondenzen in den beiden Bildern sucht.

Dabei geht die erfindungsgemäße Lösung von dem Prinzip aus, die Kohärenz des Lichts als mustererzeugend auszunutzen. Üblicherweise werden die erfindungsgemäß ausgenutzten Kohärenzeffekte als Störung aufgefasst und so weit wie möglich unterdrückt. Weiterhin wird nahezu das gesamte Licht der Lichtquelle ausgenutzt, indem lediglich die Phasen verändert werden und das Licht ansonsten weitgehend ungehindert in den Überwachungsbereich fällt.

Damit verbinden sich zahlreiche Vorteile. Bei einer extrem guten Lichtausbeute, die nahe bei 90% liegen kann und die durch hohe Energien in den Musterelementen hohe Sensorreichweiten erlaubt, entstehen durch das divergente Licht keinerlei Probleme mit Augensicherheit, da es gar keinen gebündelten Lichtstrahl gibt. Das Muster hat, weil der zugrundeliegende Effekt eine Fernfeld-Interferenz ist, eine sehr hohe Schärfentiefe und ist damit nicht auf eine einzelne Überwachungsebene festgelegt. Der Kontrast ist hoch. Das Licht ist schmalbandig, das Nutzlicht kann also leicht aus dem Umgebungslicht ausgefiltert werden. Die Beleuchtungseinheit ist flexibel ansteuerbar und kann flexible Muster erzeugen. Dabei ist sie sehr kompakt, kostengünstig und langlebig.

Die Unebenheiten sind vorteilhafterweise zumindest über den gesamten von der Lichtquelle beleuchteten Bereich des Phasenelements vorgesehen und/oder das Phasenelement weist keine glatten Teilbereiche auf. Damit entstehen überall im relevanten Überwachungsbereich Phasendifferenzen und somit Interferenzmuster. Lücken oder kontrastschwache Bereiche werden verhindert und damit die Basis für eine flächendeckende Überwachung oder eine dichte Tiefenkarte gelegt.

Die Unebenheiten sind bevorzugt unregelmäßig und gegenüber der geometrischen Ausdehnung des Phasenelements, insbesondere dessen Dicke, sehr klein, wobei die Unebenheiten über das Phasenelement variieren und/oder wobei die Unebenheiten auf einer oder mehreren Flächen des Phasenelements vorgesehen sind. Die Unebenheiten müssen lediglich Phasendifferenzen im Bereich der Wellenlängen des verwendeten Lichts erzeugen, wofür sehr kleine Dickenunterschiede genügen. Die Unebenheiten sollten bevorzugt über das Phasenelement variieren, um lokale wie globale Regelmä-ßigkeiten des erzeugten Musters zu verhindern. Es genügt prinzipiell, die Phasenunterschiede bereits auf einer Fläche beziehungsweise Oberfläche des Phasenelements zu erzeugen, aber es können auch weitere Flächen Unebenheiten aufweisen, wobei diese natürlich nur optisch aktiv sind, wenn sie im Lichteinfallsbereich liegen. Es können bereits produktionsbedingte Unebenheiten genügen, indem man einen Glättungsschritt der optisch aktiven Flächen auslässt. Dann ist das Phasenelement besonders kostengünstig. Ebenso können die Unebenheiten aber auch aktiv aufgebracht werden.

Das Phasenelement weist vorteilhafterweise transmissive oder reflexive Eigenschaften auf, ist insbesondere eine Phasenplatte oder ein Phasenspiegel, und/oder das Phasenelement hat zusätzliche strahlformende Eigenschaften, ist insbesondere als Linse oder als Hohlspiegel ausgebildet. Je nach gewünschtem Strahlengang ist ein Spiegel oder eine Platte geeigneter. Sofern zusätzliche abbildende Eigenschaften gewünscht sind, etwa zur weiteren Begrenzung des Beleuchtungsfeldes, so ist es möglich, die erforderlichen strahlformenden Eigenschaften in das Phasenelement zu integrieren und damit ein zusätzliches optisches Element verzichtbar zu machen.

Im optischen Strahlengang des Phasenelements ist bevorzugt mindestens ein weiteres optisches Element angeordnet ist, insbesondere ein Prisma, eine Platte, eine Linse oder ein Spiegel, wobei das weitere Element insbesondere mittels Unebenheiten als weiteres Phasenelement ausgebildet ist und/oder wobei eine Blende oder ein optisches Zusatzelement, insbesondere eine Zylinderlinse, vorgesehen ist, um den von dem Muster beleuchteten Bereich festzulegen. Damit können Muster und Beleuchtungsfeld mit weiteren gewünschten Eigenschaften belegt werden. Derartige Zusatzelemente sollten durch geeignete Ausbildung des Phasenelements verzichtbar sein. In einigen Anwendungen ist aber die Auftrennung gewünschter optischer Eigenschaften auf mehrere Elemente günstiger, beispielsweise um vorhandene oder standardisierte Elemente einsetzen zu können.

Das Phasenelement weist bevorzugt Glas oder Kunststoff auf, ist insbesondere eine Glasplatte, ein Kunststoffgussteil oder eine Folie, wobei das Phasenelement nochmals bevorzugt auf mindestens einer Fläche beschichtet ist oder eine Folie aufweist, wobei Beschichtung, Folie oder deren Verbindungsbereich mit dem Phasenelement die lokale Phasendifferenzen erzeugenden Unebenheiten aufweist. Diese Beschichtung oder die Folie kann eine Mikrostruktur aufweisen. Als Glasplatte oder Folie ist ein extrem kostengünstiges Phasenelement herstellbar. Die erforderlichen Unebenheiten können in diesen Materialien und bei Bedarf zusätzlich oder alternativ als Folie leicht erzeugt werden.

Die Lichtquelle ist bevorzugt ein Laser, wobei zwischen Laser und Phasenelement eine Verteilungsoptik vorgesehen ist, welche das Laserlicht divergent machen kann. Diese Verteilungsoptik kann zugleich für die Einstellung des Beleuchtungswinkels genutzt werden. Wegen der geringen Leistungsverluste in dem Phasenelement genügen moderate Lichtleistungen, oder es sind mit Hochleistungslasern höhere Reichweiten erzielbar als herkömmlich.

In einer Weiterbildung der Erfindung ist eine Vielzahl von Beleuchtungseinheiten zur Erzeugung eines selbstunähnlichen Musters in einem größeren Beleuchtungsbereich oder mit einer größeren Beleuchtungsintensität vorgesehen, wobei sich die Beleuchtungsbereiche der einzelnen Beleuchtungseinheiten überlappend oder nichtüberlappend addieren. Die Beleuchtungseinheiten können in der einen Alternative kachelartig einen größeren Beleuchtungsbereich erzeugen. Die Anordnung hat den Vorteil, dass sich die im Überwachungsbereich deponierten Lichtenergien addieren, ohne aufgrund von Überlappungen Musterkanten abzuschwächen. Wie bei mehreren Beleuchtungseinheiten mit überlappenden Beleuchtungsfeldern sind auch Multi-Emitter-Laserdioden, welche üblicherweise für hohe Ausgangsleistungen verwendet werden, kein adäquates Mittel, weil sich dabei mehrere Muster überlagern und damit den Kontrast schwächen. Da es also nicht möglich ist, die auf den gesamten Überwachungsbereich fallende Lichtleistung beliebig zu erhöhen, ist in dieser Ausführungsform vorgesehen, die Leistungsdichte durch kleinere Beleuchtungsfelder zu erhöhen und die gewünschte Größe des Überwachungsbereichs durch mehrere Beleuchtungsmodule zu erreichen. Dabei ist denkbar, jeweils dasselbe Phasenelement von allen oder mehreren Lichtquellen auszunutzen, sofern es groß genug ist, damit die genannten störenden Effekte der Lichtquellen untereinander hinreichend unterdrückt sind. In der anderen Alternative werden identische oder nicht-zufällige Muster überlagert, so dass die erforderliche Beleuchtungsintensität erst in der gemeinsamen Überlagerung erreicht wird, um mit jeder einzelnen Beleuchtungsquelle und damit auch insgesamt die Anforderungen an den Augenschutz zu erfüllen.

Die erfindungsgemäße Beleuchtungskamera wird bevorzugt in einer Sicherheitskamera eingesetzt, insbesondere in einer 3D-Stereo-Sicherheitskamera. Die Sicherheitstechnik ist besonders anspruchsvoll, und eine Sicherheitskamera kann ihre Aufgabe besser erfüllen, wenn hinreichender Kontrast im Überwachungsbereich garantiert ist. Besonders vorteilhaft ist eine Kombination mit stereoskopischen Sicherheitsanwendungen, weil das Muster die Erzeugung dichter Tiefenkarten unabhängig vom Umgebungslicht und von den Objektstrukturen im Überwachungsbereich ermöglicht.

In einer derartigen Sicherheitskamera ist bevorzugt eine Auswertungseinheit vorgesehen, welche für die Anwendung eines Stereoalgorithmus ausgebildet ist, in dem einander zugehörige Teilbereiche der von den beiden Kameras der Stereokamera aufgenommenen Bilder erkannt und deren Abstand anhand der Disparität berechnet wird, und wobei die Auswertungseinheit insbesondere weiterhin dafür ausgebildet ist, unzulässige Eingriffe in den Überwachungsbereich zu erkennen und daraufhin ein Abschaltsignal zu erzeugen. Der so implementierte Stereoalgorithmus profitiert davon, dass Korrespondenzen anhand der Beleuchtungsstruktur eindeutig bestimmbar sind. Ein unzulässiger Eingriff bedeutet, dass zum einen ein Eingriff erkannt wird und zum anderen dieser Eingriff keinem zuvor eingelernten oder algorithmisch erkannten erlaubten Objekt, keiner erlaubten Bewegung oder dergleichen entspricht.

Dabei ist nochmals bevorzugt ein Sicherheitsausgang vorgesehen, über welchen die Sicherheitskamera ein Abschaltsignal an eine überwachte Maschine ausgeben kann. Ein erkannter unzulässiger Eingriff kann damit auf sichere Weise zu einer Beseitigung der Gefährdung führen. Dabei ist denkbar, der Abschaltung eine Warnung vorzuschalten, also beispielsweise Schutzfelder zu definieren, in denen eine Abschaltung erfolgen soll, und vorgelagerte Warnfelder, in denen zunächst ein beispielsweise optischer oder akustischer Alarm ausgelöst wird, um den zur Abschaltung führenden Eingriff möglicherweise aufgrund der Warnung noch zu verhindern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Bei dem erfindungsgemäßen Verfahren wird die Strukturgröße des Musters bevorzugt durch den Abstand zwischen einer Quelle des divergenten kohärenten Lichts und dem Phasenelement eingestellt, und/oder der Beleuchtungsbereich wird mittels Blenden oder weiteren optischen Elementen eingestellt und/oder es werden mehrere Quellen für divergentes kohärentes Licht eingesetzt, um einen größeren Beleuchtungsbereich zu erzeugen. Somit wird eine hohe Flexibilität für das gewünschte Muster, welches letztlich die Auflösung eines das Muster nutzenden Sensors bestimmt, für dessen Reichweite und Beleuchtungsfeld geschaffen.

In einem stereoskopisches Bilderfassungsverfahren wird bevorzugt zur Erzeugung einer dichten Tiefenkarte einer Szenerie der Überwachungsbereich mit dem erfindungsgemäßen Beleuchtungsverfahren beleuchtet. Das besondere selbstunähnliche Muster löst Mehrdeutigkeiten in der Szenerie durch Eindeutigkeit im Muster auf. Der Stereoskopiealgorithmus kann damit jedem Teilbereich des Überwachungsbereichs unabhängig von der vorhandenen Struktur oder dem Umgebungslicht einen Entfernungswert zuordnen.

In einem Verfahren zur sicheren dreidimensionalen Überwachung eines Raumbereichs wird bevorzugt eine mit einem erfindungsgemäßen Bilderfassungsverfahren erzeugte dichte Tiefenkarte auf unzulässige Eingriffe ausgewertet und, wenn ein unzulässiger Eingriff erkannt wird, ein Abschaltsignal an eine Gefahrenquelle ausgegeben. Die dichte Tiefenkarte erlaubt eine zuverlässige sicherheitstechnische dreidimensionale Überwachung unabhängig von Szenerie und Umgebungslicht.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Ausführungsform einer erfindungsgemäßen Beleuchtungseinheit, die einen Raumbereich mit einem strukturierten Muster beleuchtet, in einer 3D-Sicherheitskamera;
- Fig. 2: eine schematische Darstellung einer Ausführungsform der erfindungsge- mäßen Beleuchtungseinheit mit eine Phasenplatte;
- Fig. 3: eine Darstellung gemäß Figur 2 einer weiteren Ausführungsform der erfin- dungsgemäßen Beleuchtungseinheit mit einem Phasenspiegel;
- Fig. 4: eine schematische Darstellung gemäß Figur 2 einer weiteren Ausfüh- rungsform der erfindungsgemäßen Beleuchtungseinheit mit einer Phasen- platte und einem weiteren nachgeordneten optischen Element; und
- Fig. 5: eine Darstellung einer Anordnung mehrerer erfindungsgemäßer Beleuch- tungseinheiten.

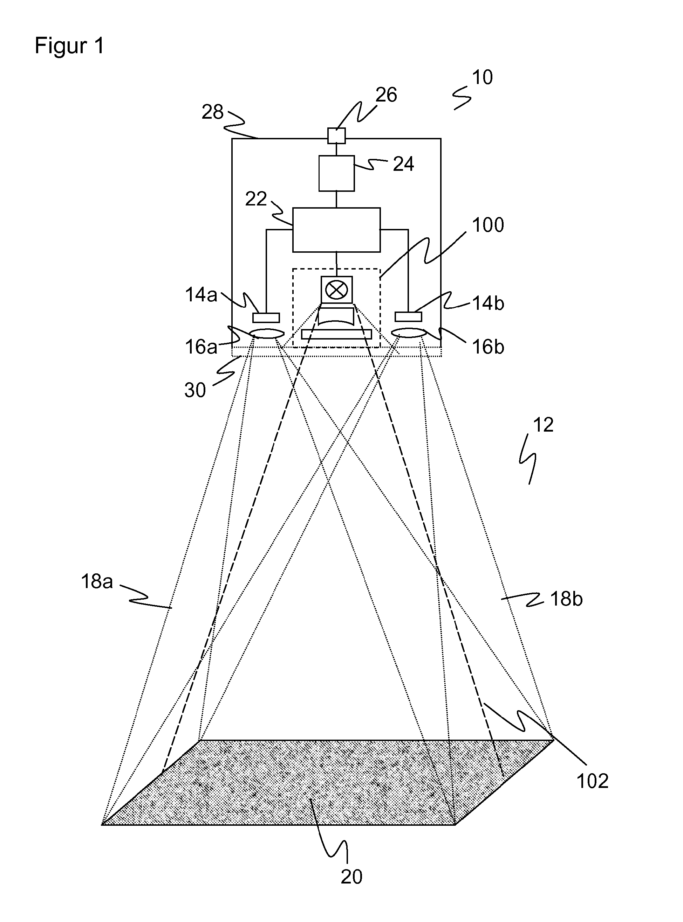

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welche als Linsen 16a, 16b dargestellt sind und in der Praxis als jede bekannte Abbildungsoptik realisiert sein können. Der Sichtwinkel dieser Optiken ist in Figur 1 durch gestrichelte Linien dargestellt, die jeweils eine Sichtpyramide 18a, 18b bilden.

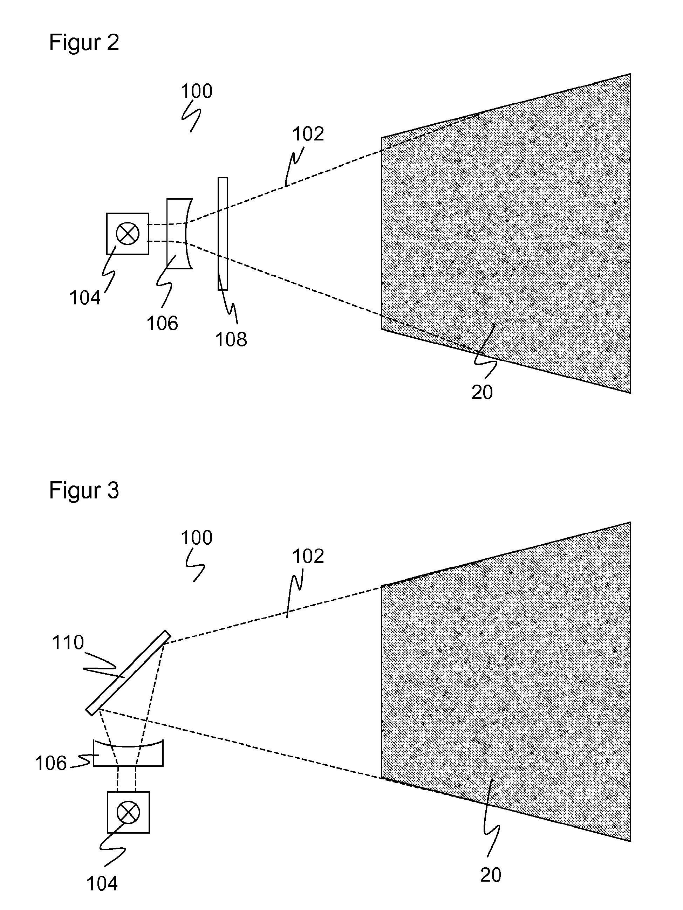

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der Sicherheitskamera 3D angeordnet sein kann. Die erfindungsgemäße Beleuchtungseinheit 100 erzeugt in einem Beleuchtungsbereich 102 ein strukturiertes Beleuchtungsmuster 20 in dem Raumbereich 12 und wird weiter unten in verschiedenen Ausführungsformen im Zusammenhang mit den Figuren 2-5 näher erläutert.

Mit den beiden Bildsensoren 14a, 14b und der Beleuchtungseinheit 100 ist eine Steuerung 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Raumbereichs 12. Das strukturierte Beleuchtungsmuster 20 sorgt dabei für einen guten Kontrast und eine eindeutig zuordenbare Struktur jedes Bildelements in dem beleuchteten Raumbereich 12. Es ist selbstunähnlich, wobei der wichtigste Aspekt der Selbstunähnlichkeit das zumindest lokale, besser globale Fehlen von Translationssymmetrien ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Mit zwei Bildsensoren 14a, 14b tritt dabei ein bekanntes Problem auf, dass Strukturen längs der Epipolarlinie nicht für die Disparitätsschätzung herangezogen werden können, weil hier kein Triangulationswinkel auftritt oder, anders ausgedrückt, das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule versetzt angeordnet sind.

Im von dem Sicherheitssensor 10 überwachten Raumbereich 12 können sich bekannte und unerwartete Objekte befinden. Dabei kann es sich beispielsweise um einen Roboterarm, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine in dem Raumbereich 12 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht. Die Steuerung 22 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 22 einen unzulässigen Eingriff in ein Schutzfeld, so wird über eine Warn- oder Abschalteinrichtung 24, die wiederum in die Steuerung 22 integriert sein kann, eine Warnung ausgegeben oder die Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sowie die Warn- oder Abschalteinrichtung 24 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

Die Sicherheitskamera 10 wird von einem Gehäuse 28 umgeben und geschützt. Durch eine Frontscheibe 30 kann Licht in und aus dem Raumbereich 12 hindurchtreten. Die Frontscheibe 30 hat Filtereigenschaften, welche auf die Sendefrequenz der Beleuchtungseinheit 100 abgestimmt ist. Selbst mit lichtstarken Beleuchtungseinheiten 100 kann nämlich bei ungünstigen Bedingungen, wie sehr hellen Umgebungen, großen Überwachungsvolumina oder großen Abständen von 5 Metern und mehr, das Nutzsignal im Rauschen des Gesamtspektrums nicht hinreichend detektiert werden. Mit einer Beleuchtungseinheit 100, die nur Licht in einem oder mehreren schmalen sichtbaren, ultravioletten oder infraroten Bändern aussendet, und einem darauf abgestimmten Filter 30 kann das Signal/Rauschverhältnis ganz erheblich verbessert werden, weil Umgebungslicht außerhalb dieser Bänder keine Rolle mehr spielt. Der optische Filter 30 kann auch anders realisiert sein, etwa in den Objektiven der Kameramodule.

Figur 2 zeigt eine erste Ausführungsform der erfindungsgemäßen Beleuchtungseinheit 100. Wie in der gesamten Beschreibung, bezeichnen gleiche Bezugszeichen die gleichen Merkmale. Eine Lichtquelle 104 erzeugt kohärentes Licht, welches ungebündelt auf eine Verteilungsoptik 106 fällt, die hier beispielhaft als Streulinse dargestellt ist. Lichtquelle 104 und Verteilungsoptik 106 bilden damit gemeinsam eine Quelle für divergentes, kohärentes Licht. Es ist denkbar, auf die Verteilungsoptik 106 zu verzichten, wenn der Streuwinkel der Lichtquelle 104 als Beleuchtungswinkel ausreicht, also in erster Linie für kleine Sichtwinkel der Sicherheitskamera 10.

Das divergente, kohärente Licht fällt auf ein in der gezeigten Ausführungsform als Phasenplatte 108 ausgebildetes mustererzeugendes Phasenelement. In der Ausführungsform gemäß Figur 2 handelt es sich dabei um eine einfache dünne Glasplatte, deren eine oder beide Flächen eine leicht unebene Topologie aufweist. Durch die lokalen Dickenunterschiede des Glases kommt es zu lokalen Phasenverschiebungen der durchtretenden Lichtwellen und deshalb in größerer Entfernung von der Phasenplatte 108 zur Ausbildung des Interferenzmusters, welches das strukturierte Beleuchtungsmuster 20 bildet. Das Interferenzmuster ist bei guter räumlicher Kohärenz der Lichtquelle 104 und geeigneter Oberflächenstruktur der Phasenplatte 108 stark durchmoduliert, so dass ein flächendeckendes Beleuchtungsmuster 20 von gut sichtbaren und selbstunähnlichen Hell-Dunkel-Übergängen entsteht. Die gute Kohärenz führt zu starken Kontrasten des Musters und nur geringem homogenem Hintergrundlicht. Bei schlechter Kohärenz oder überlappenden unabhängigen Mustern, etwa wegen mehrerer Lichtquellpunkte, wird der Kontrast deutlich abgeschwächt. Der Stereoalgorithmus kann davon beeinträchtigt werden, und die Sicherheitskamera 10 ist weniger robust gegenüber Fremdlicht.

In der Beleuchtungseinheit 100 beleuchtet die Lichtquelle 104 das Phasenelement 108 aus kurzer Entfernung mit divergentem, bevorzugt stark divergentem Licht. Dadurch gibt es, anders als beispielsweise bei Lösungen mit einem DOE für die Mustererzeugung, keinen gebündelten Strahl, der Probleme mit dem Augenschutz verursachen würde. Die Divergenz des Lichtfelds führt zudem zu einer abstandsabhängigen Krümmung der Wellenfront und damit zu einer Einstellmöglichkeit der Strukturgrößen des Interferenzmusters über den Abstand zwischen Lichtquelle 104 beziehungsweise Verteilungsoptik 106 und Phasenelement 108. Verschiebt man beispielsweise das Phasenelement 108 auf einen geringfügig größeren Abstand, so verkleinern sich die Musterstrukturen im Fernfeld, also im Raumbereich 12, und umgekehrt.

Da es sich bei dem durch das Phasenelement 108 entstehenden Effekt um eine Fernfeld-Interferenz handeln, ist die Schärfentiefe des Beleuchtungsmusters 20 sehr groß. Anders etwa als bei einem herkömmlichen Projektionsverfahren ist deshalb keine Ebene in dem Raumbereich 12 bevorzugt und die Beleuchtung damit sehr viel flexibler.

Die kohärente Lichtquelle 104 ist bevorzugt eine Laserdiode, nochmals bevorzugt ein Single-Emitter-Laser, weil mehrere Quellpunkte weitere Interferenzquellen bilden und damit Kontrastverluste in dem Muster verursachen würden. Wegen der hohen Lichtausbeute in dem Phasenelement 108 genügen vergleichsweise moderate Ausgangsleistungen, jedoch können besonders für größere Reichweiten auch die stärksten verfügbaren Hochleistungslaser eingesetzt werden.

Das Phasenelement 108 zeigt Unebenheiten zumindest über diejenigen Bereiche, in denen das strukturierte Beleuchtungsmuster 20 entstehen soll. Glatte Teilbereiche verhindern Interferenzen und sorgen damit für musterfreie Stellen, die zumindest in den meisten Anwendungen unerwünscht sind, weil sie zu Lücken in den Tiefenkarten führen können. Eine einfache Realisierung ist, dass die Unebenheiten einseitig oder beidseitig über die gesamte Oberfläche des Phasenelements 108 ausgebildet sind, oder zumindest über die optisch aktive Oberfläche. Die Unebenheiten sollten weiterhin unregelmäßig sein, weil sonst untereinander ähnliche Interferenzstrukturen im Beleuchtungsmuster 20 entstehen könnten.

Das Phasenelement 108 kann außer aus Glas auch aus einem anderen transparenten Material gefertigt sein, etwa Kunststoff aufweisen oder als Folie ausgebildet sein. Die Unebenheiten können bereits lediglich die Fertigungstoleranzen nicht geglätteter Oberflächen sein, oder sie werden eigens aufgebracht. Beschichtungen oder Beschichtungsfolien können so aufgebracht werden, dass gerade in gewöhnlichen optischen Anwendungen als unzureichend genau betrachtete unebene Verbindung für die notwendigen Unebenheiten sorgt. Auch eine Beschichtung mit entsprechenden Unebenheiten ist denkbar, sogar in Form von Mikrostrukturen. Besonders letzteres ist aber ein recht hoher Zusatzaufwand, und das Phasenelement 108 zeigt die gewünschten Effekte auch bei viel einfacher hervorgerufenen Unebenheiten. Kunststoffteile mit beliebigen gewünschten Unebenheiten können beispielsweise durch Spritzgussverfahren hergestellt werden.

Die Mustereigenschaften können genauer festgelegt werden, indem die Oberflächenstruktur des Phasenelements präzise vorgegeben wird. Beispielsweise können definierte Strukturen in Simulationsrechnungen ermittelt und dann mittels Laserlitographie erzeugt werden. Die so erzeugte Struktur kann durch Prägen, Abformen mit optischen Polymeren oder durch Präszisionsspritzguss repliziert werden.

Der Füllfaktor der beleuchteten Fläche des Phasenelements 108, also der Anteil an Strukturelementen, sollte für einen guten Kontrast und Wirkungsgrad etwa bei 50% oder darüber liegen. Die Strukturelemente selbst sind bevorzugt anisotrop, um im Beleuchtungsmuster 20 Isotropien und damit die Gefahr von Mehrdeutigkeiten zu begrenzen. Die Strukturelemente können außerdem so ausgebildet werden, dass die optische Leistung in einer vorgegebenen oder optimalen Weise über den Beleuchtungsbereich 102 verteilt wird, beispielsweise eine Randabdunkelung etwa gegeben durch die Geometrien oder Objektiveinflüsse kompensieren.

Figur 3 zeigt eine weitere Ausführungsform der Erfindung, bei der als Phasenelement ein Phasenspiegel 110 vorgesehen ist. Die lokalen Phasenunterschiede werden hier, statt wie im Beispiel der Figur 2, bei der Reflexion statt bei der Transmission erzeugt, indem die Spiegeloberfläche entsprechende Unebenheiten trägt. Die weiteren Eigenschaften und Variationsmöglichkeiten sind analog zu einer Phasenplatte. Es sind auch Mischformen mit komplizierteren optischen Elementen als Phasenelement denkbar, beispielsweise Prismen und dergleichen, welche wahlweise transmissive oder reflexive Eigenschaften haben können oder sogar beides.

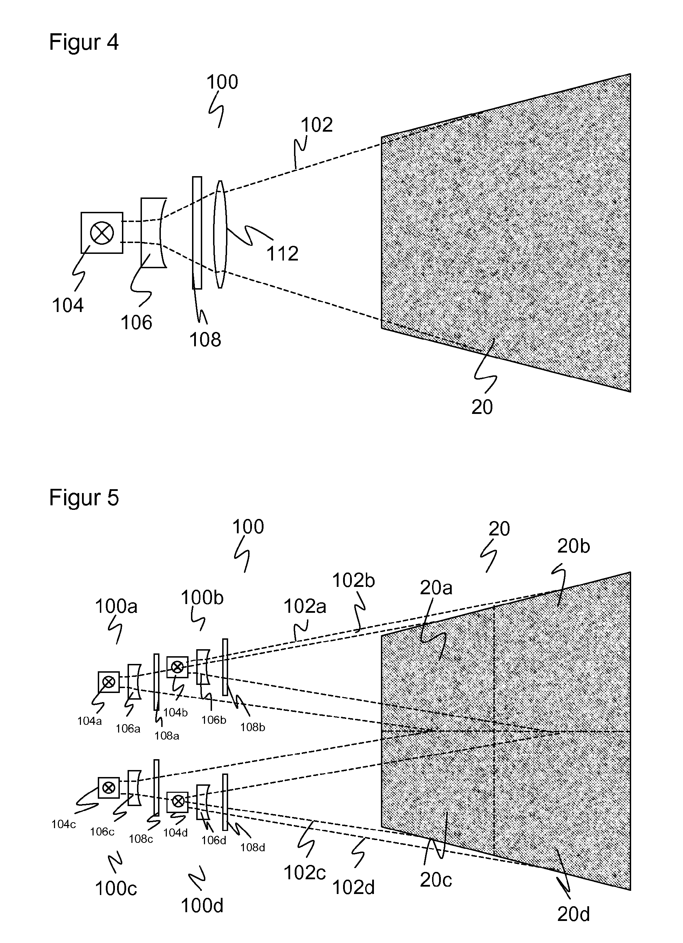

In einer weiteren Ausführungsform gemäß Figur 4 ist hinter dem Phasenelement 108 ein abbildendes optisches Element oder eine Linse 112 vorgesehen. Damit können neben dem Fernfeldinterferenzmuster auch die Nahfeldinterferenzen kurz vor oder hinter dem Phasenelement 108 in den Raumbereich 12 abgebildet werden. Man hat dann höhere Flexibilität in den Mustern, dafür aber einen größeren Aufwand, nämlich in der Bereitstellung der Abbildungsoptik 112, einer geringeren Lichtausbeute und einer reduzierten Schärfentiefe auf diejenige der Abbildungsoptik 112.

Anstelle der Abbildungsoptik 112 sind zusätzliche und/oder andere optische Elemente an verschiedenen Stellen im optischen Pfad vor und hinter dem Phasenelement 108 vorstellbar. So kann ein Element zur Änderung des natürlichen Beleuchtungsfelds der Beleuchtungseinrichtung 100 und der Lichtquelle 104 vorgesehen sein, beispielsweise eine Zylinderlinse, oder eine Blende zur Begrenzung des Beleuchtungsfeldes. Derartige Elemente können justiert werden, um das gewünschte Beleuchtungsfeld zu erreichen.

Diese optischen Elemente können ebenfalls Unebenheiten auf ihren Oberflächen aufweisen, um die mustererzeugenden Phasendifferenzen zu erzeugen oder zu verstärken. Weiterhin kann auch ein strahlformendes optisches Element und das Phasenelement 108 integrativ ausgebildet sein, beispielsweise als mit unebenen Oberflächen ausgeführte Linse oder Hohlspiegel. Auch die Frontscheibe 30 kann zugleich als Phasenplatte 108 ausgebildet sein.

Figur 5 zeigt eine Mehrfachanordnung von Beleuchtmodulen 100a-d, die in ihrer Gesamtheit die Beleuchtungseinheit 100 bilden und ihre strukturierten Beleuchtungsmuster 20a-d zu einem größeren Beleuchtungsmuster 20 addieren. Dies sollte bevorzugt überlappungsfrei geschehen, da übereinander geblendete Beleuchtungsmuster 20a-d zu Kontrastabschwächungen führen.

Jedes einzelne Beleuchtungsmodul 100a-d weist jeweils eine kohärente Lichtquelle 104a-d, eine optionale Verteilungsoptik 106 zur Verbesserung der Strahlaufweitung für divergentes Licht sowie eine Phasenplatte 108 auf. Da jedem Teilbereich 20a-d jeweils die Leistung einer eigenen Lichtquelle 104a-d zur Verfügung steht, ist die Gesamtenergie in dem Beleuchtungsmuster 20 gegenüber einer einzigen baugleichen Lichtquelle 104 erhöht. Somit können höhere Leistungen, also insbesondere höhere Reichweiten erzielt werden, oder man kommt mit kostengünstigeren und einfacheren Lichtquellen geringerer Ausgangsleistung aus. Schließlich vereinfacht die Verteilung der Lichtleistung auf mehrere Quellen etwaige Probleme mit Augenschutzgrenzen noch weiter.

Anstelle der Phasenplatte 108 können auch andere Phasenelemente eingesetzt werden, wie sie zuvor zu den anderen Ausführungsformen beschrieben wurden. Es ist auch denkbar, dass die Beleuchtungsmodule 100a-d untereinander unterschiedlich ausgebildet sind, beispielsweise teilweise mit Phasenplatten 108 und teilweise mit Phasenspiegeln 110, etwa um den Bauraum besser auszunutzen. Auch die beschriebenen weiteren optischen Elemente können in einigen oder allen Beleuchtungsmodulen 100a-d vorgesehen sein. Schließlich ist denkbar, dass ein Phasenelement 108 oder ein anderes optisches Element von mehreren Beleuchtungsmodulen 100a-d gemeinsam benutzt wird. Dabei ist in Kauf zu nehmen oder durch hinreichende Dimensionierung zu verhindern, dass die Interferenzen der mehreren Lichtquellen 104a-d zu den Kontrast beeinträchtigenden störenden Überlagerungen der einzelnen Muster 20a-d führen.

Mit der Beleuchtungseinheit 100 wird also insgesamt auf sehr einfache Weise ein strukturiertes Beleuchtungsmuster 20 in dem Raumbereich 12 erzeugt und damit die Detektionsfähigkeit der Sicherheitskamera 10 garantiert. Der einfache Aufbau mit Laserlichtquelle 104, Optik 106 und Phasenelemente 108, besonders wenn als einfache Glasplatte ausgeführt, kommt ohne aufwändige Optiken oder mikrostrukturierte Oberflächen aus, wie sie beispielsweise für ein DOE erforderlich wären. Damit ist der Aufbau extrem kostengünstig und kompakt. Aus diesem Grund sind auch Ausführungsformen wie gemäß Figur 5 mit mehreren Beleuchtungsmodulen für den praktischen Einsatz mit akzeptablem Aufwand einsetzbar.

Die entstehende strukturierte Beleuchtung 20 dient nicht nur in Sicherheitskameras, sondern auch für allgemeine Überwachungsaufgaben zur Kontrasterhöhung. Besondere Vorzüge zeigt sie aber im Zusammenhang mit stereoskopischen räumlichen Bildaufnahmeverfahren. Die entstehenden dichten Tiefenkarten wiederum können in anderen Anwendungen wie der Automatisierungstechnik verwendet werden, besonders geeignet sind sie für die Sicherheitstechnik, wo zuverlässige Auswertungen Voraussetzung des praktischen Einsatzes sind.

Auch wenn die verschiedenen optischen Elemente jeweils in den Figuren 2-5 separat beschrieben wurden, so sind die Merkmale auch anders kombinierbar. So lassen sich beispielsweise dem Phasenelement 108 vor- oder nachgeschaltete optische Elemente jeweils in gleicher Weise weitgehend unabhängig von der Ausgestaltung des Phasenelements verwenden, Einstellungen von Mustergröße und Beleuchtungsfeld analog vornehmen, und Material und Aufbau der Phasenelemente 108 selbst, besonders der Phasendifferenzen erzeugenden Oberflächen, sind jeweils austauschbar.

## Patentansprüche

1. Beleuchtungseinheit (100) mit einer divergenten kohärenten Lichtquelle (104, 106) zur Erzeugung eines zumindest lokal selbstunähnlichen Musters (20) in einem Überwachungsbereich (12),
**dadurch gekennzeichnet,**
**dass** die Beleuchtungseinheit (100) im Strahlengang der Lichtquelle (104, 106) ein optisches Phasenelement (108, 110) aufweist, welches Unebenheiten aufweist, die dafür ausgebildet sind, lokale Phasendifferenzen zwischen benachbart auf das Phasenelement treffenden Lichtanteilen und somit das selbstunähnliche Muster (20) durch Interferenzen zu erzeugen.

2. Beleuchtungseinheit (100) nach Anspruch 1,
wobei die Unebenheiten zumindest über den gesamten von der Lichtquelle (104, 106) beleuchteten Bereich des Phasenelements (108, 110) vorgesehen sind und/oder wobei das Phasenelement (108, 110) keine glatten Teilbereiche aufweist.

3. Beleuchtungseinheit (100) nach Anspruch 1 oder 2,
wobei die Unebenheiten unregelmäßig und gegenüber der geometrischen Ausdehnung des Phasenelements (108, 110), insbesondere dessen Dicke, sehr klein sind und/oder wobei die Unebenheiten über das Phasenelement (108, 110) variieren und/oder wobei die Unebenheiten auf einer oder mehreren Flächen des Phasenelements (108, 110) vorgesehen sind.

4. Beleuchtungseinheit (100) nach einem der vorhergehenden Ansprüche,
wobei das Phasenelement (108, 110) transmissive oder reflexive Eigenschaften aufweist, insbesondere eine Phasenplatte (108) oder ein Phasenspiegel (110) ist und/oder wobei das Phasenelement (108, 110) zusätzliche strahlformende Eigenschaften hat, insbesondere als Linse oder als Hohlspiegel ausgebildet ist.

5. Beleuchtungseinheit (100) nach einem der vorhergehenden Ansprüche,
wobei im optischen Strahlengang des Phasenelements (108, 110) mindestens ein weiteres optisches Element (112) angeordnet ist, insbesondere ein Prisma, eine Platte, eine Linse oder ein Spiegel, wobei das weitere Element insbesondere mittels Unebenheiten als weiteres Phasenelement ausbildet ist und/oder wobei eine Blende oder ein optisches Zusatzelement, insbesondere eine Zylinderlinse, vorgesehen ist, um den von dem Muster beleuchteten Bereich festzulegen.

6. Beleuchtungseinheit (100) nach einem der vorhergehenden Ansprüche, wobei das Phasenelement (108, 110) Glas oder Kunststoff aufweist, insbesondere eine Glasplatte, ein Kunststoffgussteil oder eine Folie ist und/oder wobei das Phasenelement (108, 110) auf mindestens einer Fläche beschichtet ist oder eine Folie aufweist, wobei Beschichtung, Folie oder deren Verbindungsbereich mit dem Phasenelement (108, 110) die lokale Phasendifferenzen erzeugenden Unebenheiten aufweist.

7. Beleuchtungseinheit (100) nach einem der vorhergehenden Ansprüche, wobei die Lichtquelle ein Laser (104) ist und wobei zwischen Laser (104) und Phasenelement (108, 110) eine Verteilungsoptik (106) vorgesehen ist, welche das Laserlicht divergent machen kann.

8. Anordnung einer Vielzahl von Beleuchtungseinheiten (100a-d) nach einem der Ansprüche 1 bis 7 zur Erzeugung eines selbstunähnlichen Musters (20) in einem größeren Beleuchtungsbereich oder mit einer größeren Beleuchtungsintensität, wobei sich die Beleuchtungsbereiche (20a-d) der einzelnen Beleuchtungseinheiten (100a-d) überlappend oder nichtüberlappend addieren.

9. Sicherheitskamera (10), insbesondere 3D-Stereo-Sicherheitskamera, mit mindestens einer Beleuchtungseinheit (100) nach einem der Ansprüche 1 bis 8.

10. Sicherheitskamera (10) nach Anspruch 9,
wobei eine Auswertungseinheit (22) vorgesehen ist, welche für die Anwendung eines Stereoalgorithmus ausgebildet ist, in dem einander zugehörige Teilbereiche der von den beiden Kameras (14a-b, 16a-b) der Stereokamera (10) aufgenommenen Bilder erkannt und deren Abstand anhand der Disparität berechnet wird, und wobei die Auswertungseinheit (22) insbesondere weiterhin dafür ausgebildet ist, unzulässige Eingriffe in den Überwachungsbereich (12) zu erkennen und daraufhin ein Abschaltsignal zu erzeugen

11. Sicherheitskamera (10) nach Anspruch 9 oder 10,
wobei ein Sicherheitsausgang (26) vorgesehen ist, über welchen die Sicherheitskamera (10) ein Abschaltsignal an eine überwachte Maschine ausgeben kann.

12. Verfahren zur Beleuchtung eines Überwachungsbereichs (12) mit einem zumindest lokal selbstunähnlichen Muster (20),
**dadurch gekennzeichnet,**
**dass** das Muster (20) erzeugt wird, indem divergentes kohärentes Licht auf ein Phasenelement (108, 110) eingestrahlt wird und wobei Unebenheiten des Phasenelements (108, 110) lokale Phasendifferenzen zwischen benachbart auf das Phasenelement (108, 110) treffenden Lichtanteilen und somit das selbstunähnliche Muster (20) durch Interferenzen erzeugen.

13. Verfahren nach Anspruch 12,
wobei die Strukturgröße des Musters (20) durch den Abstand zwischen einer Quelle (104, 106) des divergenten kohärenten Lichts und dem Phasenelement (108, 110) eingestellt wird und/oder wobei der Beleuchtungsbereich mittels Blenden oder weiteren optischen Elementen eingestellt wird und/oder wobei mehrere Quellen (100a-d, 104a-d) für divergentes kohärentes Licht eingesetzt werden, um einen größeren Beleuchtungsbereich zu erzeugen.

14. Stereoskopisches Bilderfassungsverfahren zur Erzeugung einer dichten Tiefenkarte einer Szenerie in einem Überwachungsbereich (12), wobei der Überwachungsbereich (12) mit einem Verfahren nach Anspruch 12 oder 13 beleuchtet wird.

15. Verfahren zur sicheren dreidimensionalen Überwachung eines Raumbereichs (12), bei dem eine mit einem Bilderfassungsverfahren gemäß Anspruch 14 erzeugte dichte Tiefenkarte auf unzulässige Eingriffe ausgewertet und, wenn ein unzulässiger Eingriff erkannt wird, ein Abschaltsignal an eine Gefahrenquelle ausgegeben wird.

## Geänderte Patentansprüche

### Geänderte Patentansprüche gemäss Regel 137(2) EPÜ.

**1.** Beleuchtungseinheit (100) mit einer kohärenten Laserlichtquelle (104, 106) zur Erzeugung eines zumindest lokal selbstunähnlichen Musters (20) in einem Überwachungsbereich (12), wobei die Beleuchtungseinheit (100) im Strahlengang der Lichtquelle (104, 106) ein optisches Phasenelement (108, 110) aufweist, welches Unebenheiten aufweist, die dafür ausgebildet sind, lokale Phasendifferenzen zwischen benachbart auf das Phasenelement treffenden Lichtanteilen und somit das selbstunähnliche Muster (20) durch Interferenzen zu erzeugen,
**dadurch gekennzeichnet,**
**dass** zwischen der Laserlichtquelle (104) und dem Phasenelement (108, 110) eine Verteilungsoptik (106) vorgesehen ist, so dass das Laserlicht divergent auf das Phasenelement (108, 110) fällt, und dass das Phasenelement (108, 110) derart ausgebildet ist, dass überall im relevanten Überwachungsbereich Phasendifferenzen und somit Interferenzmuster entstehen, um Lücken oder kontrastschwache Bereiche zu verhindern.

**2.** Beleuchtungseinheit (100) nach Anspruch 1,
wobei die Unebenheiten zumindest über den gesamten von der Lichtquelle (104, 106) beleuchteten Bereich des Phasenelements (108, 110) vorgesehen sind und/oder wobei das Phasenelement (108, 110) keine glatten Teilbereiche aufweist.

**3.** Beleuchtungseinheit (100) nach Anspruch 1 oder 2,
wobei die Unebenheiten unregelmäßig und gegenüber der geometrischen Ausdehnung des Phasenelements (108, 110), insbesondere dessen Dicke, sehr klein sind und/oder wobei die Unebenheiten über das Phasenelement (108, 110) variieren und/oder wobei die Unebenheiten auf einer oder mehreren Flächen des Phasenelements (108, 110) vorgesehen sind.

**4.** Beleuchtungseinheit (100) nach einem der vorhergehenden Ansprüche,
wobei das Phasenelement (108, 110) transmissive oder reflexive Eigenschaften aufweist, insbesondere eine Phasenplatte (108) oder ein Phasenspiegel (110) ist und/oder wobei das Phasenelement (108, 110) zusätzliche strahlformende Eigenschaften hat, insbesondere als Linse oder als Hohlspiegel ausgebildet ist.

**5.** Beleuchtungseinheit (100) nach einem der vorhergehenden Ansprüche,
wobei im optischen Strahlengang des Phasenelements (108, 110) mindestens ein weiteres optisches Element (112) angeordnet ist, insbesondere ein Prisma, eine Platte, eine Linse oder ein Spiegel, wobei das weitere Element insbesondere mittels Unebenheiten als weiteres Phasenelement ausbildet ist und/oder
wobei eine Blende oder ein optisches Zusatzelement, insbesondere eine Zylinderlinse, vorgesehen ist, um den von dem Muster beleuchteten Bereich festzulegen.

**6.** Beleuchtungseinheit (100) nach einem der vorhergehenden Ansprüche,
wobei das Phasenelement (108, 110) Glas oder Kunststoff aufweist, insbesondere eine Glasplatte, ein Kunststoffgussteil oder eine Folie ist und/oder wobei das Phasenelement (108, 110) auf mindestens einer Fläche beschichtet ist oder eine Folie aufweist, wobei Beschichtung, Folie oder deren Verbindungsbereich mit dem Phasenelement (108, 110) die lokale Phasendifferenzen erzeugenden Unebenheiten aufweist.

**7.** Anordnung einer Vielzahl von Beleuchtungseinheiten (100a-d) nach einem der Ansprüche 1 bis 6 zur Erzeugung eines selbstunähnlichen Musters (20) in einem größeren Beleuchtungsbereich oder mit einer größeren Beleuchtungsintensität, wobei sich die Beleuchtungsbereiche (20a-d) der einzelnen Beleuchtungseinheiten (100a-d) überlappend oder nichtüberlappend addieren.

**8.** Sicherheitskamera (10), insbesondere 3D-Stereo-Sicherheitskamera, mit mindestens einer Beleuchtungseinheit (100) nach einem der Ansprüche 1 bis 7, die ein optisches Filter (30) aufweist, welches auf die Sendefrequenz der Beleuchtungseinheit (100) abgestimmt ist.

**9.** Sicherheitskamera (10) nach Anspruch 8,
wobei eine Auswertungseinheit (22) vorgesehen ist, welche für die Anwendung eines Stereoalgorithmus ausgebildet ist, in dem einander zugehörige Teilbereiche der von den beiden Kameras (14a-b, 16a-b) der Stereokamera (10) aufgenommenen Bilder erkannt und deren Abstand anhand der Disparität berechnet wird, und wobei die Auswertungseinheit (22) insbesondere weiterhin dafür ausgebildet ist, unzulässige Eingriffe in den Überwachungsbereich (12) zu erkennen und daraufhin ein Abschaltsignal zu erzeugen.

**10.** Sicherheitskamera (10) nach Anspruch 8 oder 9,
wobei ein Sicherheitsausgang (26) vorgesehen ist, über welchen die Sicherheitskamera (10) ein Abschaltsignal an eine überwachte Maschine ausgeben kann.

**11.** Verfahren zur Beleuchtung eines Überwachungsbereichs (12) mit einem zumindest lokal selbstunähnlichen Muster (20), wobei das Muster (20) erzeugt wird, indem kohärentes Licht auf ein Phasenelement (108, 110) eingestrahlt wird und wobei Unebenheiten des Phasenelements (108, 110) lokale Phasendifferenzen zwischen benachbart auf das Phasenelement (108, 110) treffenden Lichtanteilen und somit das selbstunähnliche Muster (20) durch Interferenzen erzeugen,
**dadurch gekennzeichnet,**
**dass** das Licht divergent auf das Phasenelement (108, 110) eingestrahlt wird und das Phasenelement (108, 110) überall im relevanten Überwachungsbereich Phasendifferenzen und somit Interferenzmuster erzeugt, um Lücken oder kontrastschwache Bereiche zu verhindern, und somit ein flächendeckendes Beleuchtungsmuster (20) entsteht.

**12.** Verfahren nach Anspruch 11,
wobei die Strukturgröße des Musters (20) durch den Abstand zwischen einer Quelle (104, 106) des divergenten kohärenten Lichts und dem Phasenelement (108, 110) eingestellt wird und/oder wobei der Beleuchtungsbereich mittels Blenden oder weiteren optischen Elementen eingestellt wird und/oder wobei mehrere Quellen (100a-d, 104a-d) für divergentes kohärentes Licht eingesetzt werden, um einen größeren Beleuchtungsbereich zu erzeugen.

**13.** Stereoskopisches Bilderfassungsverfahren zur Erzeugung einer dichten Tiefenkarte einer Szenerie in einem Überwachungsbereich (12), wobei der Überwachungsbereich (12) mit einem Verfahren nach Anspruch 11 oder 12 beleuchtet wird und wobei das einfallende Licht einen auf die Sendefrequenz des Sendelichts abgestimmten optischen Filter (30) passiert.

**14.** Verfahren zur sicheren dreidimensionalen Überwachung eines Raumbereichs (12), bei dem eine mit einem Bilderfassungsverfahren gemäß Anspruch 13 erzeugte dichte Tiefenkarte auf unzulässige Eingriffe ausgewertet und, wenn ein unzulässiger Eingriff erkannt wird, ein Abschaltsignal an eine Gefahrenquelle ausgegeben wird.
